# EUROPEAN PATENT APPLICATION

(11) **EP 4 057 387 A1**
(43) Date of publication of application: **14.09.2022**
(21) Application number: 20895828.0
(22) Date of filing: 16.09.2020
(51) Int. Cl.: H01M 4/36

(54) **LITHIUM ION BATTERY POSITIVE ELECTRODE MATERIAL AND PREPARATION METHOD THEREFOR**

(30) Priority: 02.12.2019 CN 201911223924
(71) Applicant: Huawei Technologies Co., Ltd., Shenzhen, Guangdong 518129 (CN); XTC New Energy Materials (Xiamen) Ltd., Xiamen, Fujian 361000 (CN)
(72) Inventor: LEI, Yu, Shenzhen, Guangdong 518129 (CN); LEI, Dan, Shenzhen, Guangdong 518129 (CN); LI, Yangxing, Shenzhen, Guangdong 518129 (CN); ZHANG, jian, Xiamen, Fujian 361000 (CN); ZENG, leiying, Xiamen, Fujian 361000 (CN); XIA, Shengan, Shenzhen, Guangdong 518129 (CN); GAO, Yunlei, Shenzhen, Guangdong 518129 (CN); XU, Fan, Shenzhen, Guangdong 518129 (CN)
(74) Representative: Thun, Clemens
(86) International application number: PCT/CN2020/115684
(87) International publication number: WO 2021/109676

(57) **Abstract**

A lithium-ion battery cathode material and a method for preparing the same are disclosed. The lithium-ion battery cathode material includes a layered cathode material matrix and a defect layer. The layered cathode material matrix includes body layers and lithium layers, and the body layer includes a transition metal layer and a lithium layer. The defect layer includes atoms with a periodic arrangement different from that of atoms in the matrix or with content different from that of an element in the matrix. The defect layer is parallel to a 003 crystal plane of the layered cathode material matrix, and dimensions of the defect layer are 0.1 nm to 50 nm in at least one direction and 10 nm to 5000 nm in at least another direction. When the defect layer includes atoms with the periodic arrangement from that of the atoms in the matrix, an interlayer spacing of the defect layer is different from an interlayer spacing of the matrix. When the defect layer includes atoms with content different from that of the element in the matrix, the defect layer includes a first element or a second element, and content of the first element or the second element in the defect layer is greater than or equal to that in the layered cathode material matrix. The first element or the second element in the defect layer fills a gap between the body layers, or ions formed by the first element in the defect layer replace cations in the layered cathode material matrix, or ions formed by the second element in the defect layer replace anions in the layered cathode material matrix. During a charge/discharge process, the defect layer in the lithium-ion battery cathode material plays a role in buffering a volume change of the cathode material, so as to stabilize a structure of the lithium-ion battery cathode material.

## Description

### TECHNICAL FIELD

This application relates to the field of materials, and in particular, to a lithium-ion battery cathode material, a method for preparing the lithium-ion battery cathode material, and a lithium-ion battery.

### BACKGROUND

At present, lithium-ion batteries have been widely used in various electronic devices (for example, personal mobile terminals, personal computers, wearable devices, and vehicle-mounted terminals). With a continuously growing requirement for performance of electronic devices, a higher requirement is put forward for battery life and service life of the lithium-ion battery. Increasing energy density of the lithium-ion battery is one of major ways to improve the battery life and the service life of the lithium-ion battery. However, the increase in the energy density of the lithium-ion battery causes a problem of decay of cycle life. To be specific, in a charge process, when lithium ions are separated from a lattice of a cathode material, the lattice expands or shrinks dramatically, which eventually causes a layered structure in a cathode material crystal to collapse, forming an inactive phase, and leading to an irreversible capacity loss. In addition, with repeated expansion or shrinkage of the lattice, stresses are generated inside the crystal, resulting in dislocation and sliding of the lattice, and eventually cracking of the crystal. Side reaction between the formed crack and an electrolyte further occurs, which generates an inactive phase, thereby hindering conduction of lithium ions. As a result, impedance of the cathode material is increased, and cycling performance decreases.

### SUMMARY

Embodiments of this application provide a lithium-ion battery cathode material and a preparation method. Embodiments of this application provide an ion battery cathode material that has good cycling performance and relatively high energy density, and can suppress and reduce lattice dislocation, sliding, and crystal cracking caused by lattice expansion or shrinkage in a charge/discharge process.

According to a first aspect, this application discloses a lithium-ion battery cathode material. The lithium-ion battery cathode material includes a layered cathode material matrix and a defect layer. The layered cathode material matrix includes body layers and lithium layers, and the body layer includes a transition metal layer and a lithium layer. The defect layer includes atoms with a periodic arrangement different from that of atoms in the matrix or with content different from that of an element in the matrix. Dimensions of the defect layer are 0.1 nm to 50 nm in at least one direction and 10 nm to 5000 nm in at least another direction.

According to the first aspect, in a possible implementation, the defect layer includes atoms with a periodic arrangement different from that of the atoms in the matrix, an interlayer spacing of the defect layer is different from that of the cathode material matrix, and the defect layer is a dislocation structure. Such a dislocation structure plays a buffering role in a charge/discharge process, thereby reducing lattice distortion caused by volume expansion or shrinkage of the layered matrix material, and suppressing cracking of a layered structure of the cathode material matrix. Therefore, a particle of the cathode material is not easy to crack in a cycling process, thereby improving cycling performance of the cathode material.

According to the first aspect, in a possible implementation, the defect layer includes atoms with content different from that of the element in the matrix, the defect layer includes the first element, and content of the first element in the defect layer is greater than or equal to that in the layered cathode material matrix; and the first element in the defect layer fills the gap between the body layers, or ions formed by the first element in the defect layer replace cations in the layered cathode material matrix. In a charge/discharge process, the defect layer in the lithium-ion battery cathode material does not expand or shrink in volume to deform with the layered cathode material matrix, and therefore has a function of stabilizing a structure of the lithium-ion battery cathode material. In addition, the defect layer can hinder generation and expansion of dislocation of the layered cathode material matrix, and suppress cracking of the layered structure of the cathode material matrix. Therefore, a particle of the cathode material is not easy to crack in a cycling process, thereby improving cycling performance of the cathode material.

According to the first aspect, in a possible implementation, an ionic radius of the first element ranges from 0.04 nm to 0.08 nm, so that the ionic radius of the first element is close to a radius of a cation in the body layer of the cathode material matrix, and therefore ions of the first element can easily enter the cathode material.

According to the first aspect, in a possible implementation, the first element is at least one of Mg, Al, Ni, Mn, Ca, Fe, Ga, Ti, Mo, W, or Zn.

According to the first aspect, in a possible implementation, the defect layer further includes the second element, and content of the second element in the defect layer is greater than or equal to that in the layered cathode material matrix; and the second element in the defect layer fills the gap between the body layers, or ions formed by the second element in the defect layer replace anions in the layered cathode material matrix. In a charge/discharge process, the defect layer in the lithium-ion battery cathode material does not expand or shrink in volume to deform with the layered cathode material matrix, and therefore has a function of stabilizing a structure of the lithium-ion battery cathode material. In addition, the defect layer can hinder generation and expansion of dislocation of the layered cathode material matrix, and suppress cracking of the layered structure of the cathode material matrix. Therefore, a particle of the cathode material is not easy to crack in a cycling process, thereby improving cycling performance of the cathode material.

According to the first aspect, in a possible implementation, the second element is at least one of F, Cl, C, S, or P.

According to the first aspect, in a possible implementation, electronegativity of the second element is higher than electronegativity of the oxygen element.

According to the first aspect, in a possible implementation, bond energy of an ionic bond formed between the first element and the second element is greater than bond energy of an ionic bond formed between the transition metal and the oxygen in the layered cathode material matrix, so that the first element and the second element form a relatively stable compound in the cathode material, and the compound is not easy to oxidize or reduce.

According to the first aspect, in a possible implementation, the defect layer is parallel to a 003 crystal plane of the layered cathode material matrix.

According to the first aspect, in a possible implementation, the layered cathode material matrix is a single-crystal or quasi-single-crystal structure.

According to a second aspect, this application discloses a lithium-ion battery cathode material. The lithium-ion battery cathode material includes a layered cathode material matrix and a defect layer. The layered cathode material matrix includes body layers and lithium layers. The defect layer is a dislocation layer formed by displacement of the body layer and the lithium layer, and dimensions of the defect layer are 0.1 nm to 10 nm in at least one direction and 10 nm to 2000 nm in at least another direction. The defect layer is parallel to a 003 crystal plane of the layered cathode material matrix.

According to the second aspect, the defect layer includes a second element, and content of the second element in the defect layer is greater than or equal to that in the layered cathode material matrix; and the second element in the defect layer fills a gap between the body layers, or ions formed by the second element in the defect layer replace anions in the layered cathode material matrix. In a charge/discharge process, the defect layer in the lithium-ion battery cathode material does not expand or shrink in volume to deform with the layered cathode material matrix, and therefore has a function of stabilizing a structure of the lithium-ion battery cathode material. In addition, the defect layer can hinder generation and expansion of dislocation of the layered cathode material matrix, and suppress cracking of the layered structure of the cathode material matrix. Therefore, a particle of the cathode material is not easy to crack in a cycling process, thereby improving cycling performance of the cathode material.

According to the second aspect, in a possible implementation, the second element is at least one of F, Cl, C, S, or P.

According to the second aspect, in a possible implementation, electronegativity of the second element is higher than electronegativity of the oxygen element.

According to the second aspect, in a possible implementation, the defect layer includes a first element, and content of the first element in the defect layer is greater than or equal to that in the layered cathode material matrix; and the first element in the defect layer fills a gap between the body layers, or ions formed by the first element in the defect layer replace cations in the layered cathode material matrix.

According to the second aspect, in a possible implementation, an ionic radius of the first element ranges from 0.04 nm to 0.08 nm, so that the ionic radius of the first element is close to a radius of a cation in the body layer of the cathode material matrix, and therefore ions of the first element can easily enter the cathode material.

According to the second aspect, in a possible implementation, the first element is at least one of Mg, Al, Ni, Mn, Ca, Fe, Ga, Ti, Mo, W, or Zn.

According to the second aspect, in a possible implementation, the layered cathode material matrix is a single-crystal structure.

According to a third aspect, this application discloses a method for preparing lithium-ion battery cathode material. The method includes:
mixing a cathode material precursor and a lithium source, and after primary sintering, performing primary cooling with a rate of the cooling greater than a natural cooling rate, to obtain a cathode material having a defect layer with a different periodic arrangement from that of atoms in a matrix; and mixing the cathode material having the defect layer with a periodic arrangement different from that of the atoms in the matrix and a compound containing a first element or a second element, and after secondary sintering, performing secondary cooling, to obtain a cathode material, where the cathode material includes a layered cathode material matrix and a plurality of defect layers dispersed in the layered cathode material matrix, the defect layer includes the first element or the second element, and content of the first element or the second element in the defect layer is greater than or equal to that in the layered cathode material matrix. In a rapid cooling process, because a surface and the inside of the cathode material have different cooling rates, different shrinkage stresses are generated in different positions of the cathode material, so as to form a large quantity of defects in the cathode material. After the secondary sintering, the secondary cooling is performed, the first element or the second element absorbs heat energy and diffuses into the layered cathode material matrix to form a plurality of defect layers.

According to the third aspect, in a possible implementation, the first element or the second element in the defect layer fills a gap between body layers of the layered cathode material matrix, or ions formed by the first element or the second element in the defect layer replace lithium ions, or ions in the body layer.

According to the third aspect, in a possible implementation, the rate of the primary cooling is greater than or equal to 5°C/min, so that defects are formed in a cathode material intermediate during the rapid cooling process.

According to the third aspect, in a possible implementation, the rate of the primary cooling is greater than or equal to 10°C/min, so that defects are formed in a cathode material intermediate during the rapid cooling process.

According to the third aspect, in a possible implementation, the cathode material intermediate is a layered cathode material matrix in which a gap exists between body layers.

According to the third aspect, in a possible implementation, the compound containing the first element or the second element includes at least one of: lithium fluoride, magnesium fluoride, aluminum fluoride, nickel fluoride, manganese fluoride, calcium fluoride, iron fluoride, gallium fluoride, titanium fluoride, molybdenum fluoride, tungsten fluoride, lithium chloride, magnesium chloride, aluminum chloride, nickel chloride, manganese fluoride, calcium chloride, ferric chloride, gallium chloride, titanium chloride, molybdenum chloride, tungsten chloride, lithium carbonate, magnesium carbonate, aluminum carbonate, nickel carbonate, manganese carbonate, calcium carbonate, iron carbonate, titanium carbonate, lithium sulfide, magnesium sulfide, aluminum sulfide, nickel sulfide, manganese sulfide, calcium sulfide, titanium sulfide, molybdenum sulfide, tungsten sulfide, lithium oxide, magnesium oxide, aluminum oxide, nickel oxide, manganese oxide, calcium oxide, iron oxide, gallium oxide, titanium oxide, molybdenum oxide, tungsten oxide, lanthanum fluoride, lanthanum chloride, lanthanum sulfide, zinc fluoride, zinc chloride, zinc carbonate, zinc sulfide, zinc oxide, boron fluoride, boron chloride, boron oxide, tin fluoride, tin chloride, tin oxide, tin carbonate, tin sulfide, lithium phosphate, magnesium phosphate, aluminum phosphate, or iron phosphate.

According to the third aspect, in a possible implementation, the cathode material precursor includes at least one of cobalt tetroxide, cobalt carbonate, cobalt hydroxide, cobalt oxyhydroxide, or a nickel-cobalt-manganese ternary hydroxide precursor.

According to the third aspect, in a possible implementation, the lithium source is a lithium-containing compound or a combination thereof, and includes at least one of lithium hydroxide, lithium nitrate, lithium carbonate, lithium oxalate, lithium acetate, lithium oxide, or lithium citrate.

According to the third aspect, in a possible implementation, the compound has a particle diameter of less than 500 nm, and has strong diffusion kinetic energy, and therefore gradually diffuses from a surface to the plurality of defect layers in the layered cathode material matrix along a lattice gap.

According to the third aspect, in a possible implementation, the compound has a particle diameter of less than 100 nm, and has strong diffusion kinetic energy, and therefore gradually diffuses from a surface to the plurality of defect layers in the layered cathode material matrix along a lattice gap.

According to a fourth aspect, an embodiment of this application further provides a lithium-ion battery. The lithium-ion battery includes a cathode plate, an anode plate, an electrolyte, and an isolation film disposed between the cathode and anode plates. The cathode plate includes a cathode current collector and a cathode active material layer distributed on the cathode current collector, and the cathode active material layer is the lithium-ion battery cathode material according to the first aspect or the second aspect.

According to a fifth aspect, an embodiment of this application further provides a mobile terminal, including a housing, a working circuit, and a charging port installed on the housing. The mobile terminal includes the lithium-ion battery according to the fourth aspect, and the lithium-ion battery is configured to supply electric energy to the working circuit and is charged by using the charging port.

Therefore, in any aspect or any possible implementation of any aspect in embodiments of this application, the layered cathode material matrix of the lithium-ion battery cathode material includes the body layer and a plurality of defect layers dispersed in the layered cathode material matrix. The defect layer includes the first element or the second element, and content of the first element or the second element in the defect layer is greater than or equal to that in the layered cathode material matrix. The first element or the second element in the defect layer fills the gap between the body layers, or the ions formed by the first element in the defect layer replace the cations in the layered cathode material matrix, or the ions formed by the second element in the defect layer replace the anions in the layered cathode material matrix. In the charge/discharge process, the defect layer does not expand or shrink, and therefore plays a supporting role in the layered cathode material, and suppresses expansion or shrinkage of the body layer. In addition, there is interaction between the element in the defect layer and the element in the body layer, to suppress lattice dislocation, sliding, and crystal cracking caused during lattice expansion or shrinkage, thereby stabilizing a structure of the layered cathode material, and achieving good cycling performance and relatively high energy density.

### BRIEF DESCRIPTION OF DRAWINGS

FIG. 1 is a schematic diagram of a structure of a lithium-ion battery.
FIG. 2 is a schematic diagram of a lattice structure of a lithium-ion battery cathode material (lithium cobalt oxide is used as an example) according to an embodiment of this application;
FIG. 3 is a schematic diagram of a structure of a lithium-ion battery cathode material having a defect layer according to an embodiment of this application;
FIG. 4 is a schematic diagram of a structure of a defect layer of a cathode material according to an embodiment of this application;
FIG. 5 is a schematic diagram of a structure of a defect layer of another cathode material according to an embodiment of this application;
FIG. 6 is a schematic diagram of a structure of a defect layer of another cathode material according to an embodiment of this application;
FIG. 7 is a flowchart of a method for preparing a lithium-ion battery cathode material according to an embodiment of this application;
FIG. 8(a) is a STEM representation diagram (a scale of 100 nm) of a lithium cobalt oxide cathode material according to Embodiment 1 of this application;
FIG. 8(b) is a STEM representation diagram (a scale of 20 nm) of a lithium cobalt oxide cathode material according to Embodiment 1 of this application;
FIG. 8(c) is a STEM representation diagram (a scale of 10 nm) of a lithium cobalt oxide cathode material according to Embodiment 1 of this application;
FIG. 9 is an EDS analysis diagram of an element in a defect layer of a lithium cobalt oxide cathode material having the defect layer according to Embodiment 1 of this application;
FIG. 10 shows an X-ray diffraction spectrum of a lithium cobalt oxide cathode material having a defect layer according to Embodiment 1 of this application;
FIG. 11 is an in-situ XRD representation diagram of a lithium cobalt oxide cathode material having a defect layer according to Embodiment 1 of this application;
FIG. 12 is a STEM representation diagram of a lithium cobalt oxide cathode material having a defect layer according to Embodiment 2 of this application;
FIG. 13 is an EDS analysis diagram of a lithium cobalt oxide cathode material having a defect layer according to Embodiment 2 of this application;
FIG. 14 is a STEM representation diagram of a lithium cobalt oxide cathode material having a defect layer according to Comparative Embodiment 1 of this application;
FIG. 15 is a STEM representation diagram of a lithium cobalt oxide cathode material having a defect layer according to Comparative Embodiment 1 of this application; and
FIG. 16 is a schematic diagram of a lithium-ion battery including a lithium cobalt oxide cathode material according to an embodiment of this application.

### DESCRIPTION OF EMBODIMENTS

The following descriptions are optional implementations of embodiments of the present invention. It should be noted that a person of ordinary skill in the art may make several improvements and polishing without departing from the principle of embodiments of the present invention and the improvements and polishing shall fall within the protection scope of embodiments of the present invention.

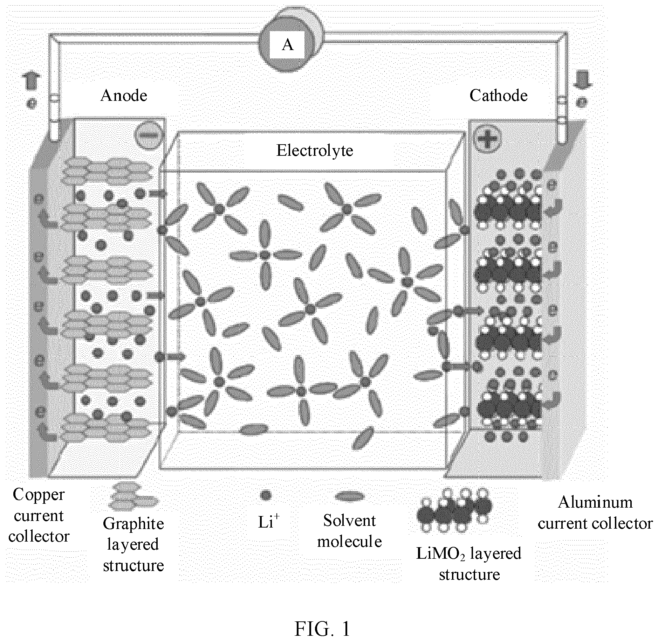

FIG. 1 is a schematic diagram of a structure of a lithium-ion battery. In this system, a cathode material is used as a source of lithium ions, and capacity of lithium ions directly determines energy density of the system. In order to improve the capacity of lithium ions, a voltage of the system needs to be increased so that more lithium ions move out from the cathode material to participate in electrochemical reactions. However, this causes a series of problems, for example, a structure of the cathode material is damaged, and side reaction between the cathode material and a surface of an electrolyte is increased. This eventually leads to deterioration of the capacity of lithium ions. Therefore, development of a high-capacity and high-stability cathode material is a key to improve energy density of the battery.

For the foregoing problem, an embodiment of the present invention provides a lithium-ion battery cathode material. The lithium-ion battery cathode material includes a layered cathode material matrix, and the layered cathode material matrix includes a body layer and a defect layer dispersed in the layered cathode material matrix. The layered cathode material matrix is at least one of lithium cobalt oxide, a ternary material, or a lithium-rich manganese based material. A general formula of the layered cathode material matrix is LiMO₂ (M refers to one or any combination of Co, Ni, and Mn). A general formula of the lithium cobalt oxide is Li₁₊ₓCo_{1-y}J_{y}O₂, where 0 ≦ x < 0.1, 0 ≦ y < 0.1, and J is at least one element of Al, Ga, Hf, Mg, Sn, Zn, Zr, Ni, Mn, V, Mo, Nb, Cu, Fe, In, W, Cr, Ti or Ca. A general formula of the lithium nickel manganese cobalt oxide ternary material is Li₁₊ₙNiₓCo_{y}E_{1-x-y}O₂, where E is at least one of Mn, Al, Mg, Ti, Zr, Ca, Fe, or a rare earth element, 0 ≤ n < 0.1, 0.3 ≤ x < 1, 0.1 ≤ y < 1, and 0 < x + y < 1. A general formula of the lithium-rich manganese-based material is nLi₂MnO₃·(1-n)LiGO₂, where 0 < n < 1, LiGO₂ is LiCoₓNi_{y}Mn_{z}O₂, 0 < x < 1, 0 < y < 1, 0 < z < 1, and x + y + z = 1. "At least one" means greater than or equal to one, that is, "at least one" may be one, two, or more than two.

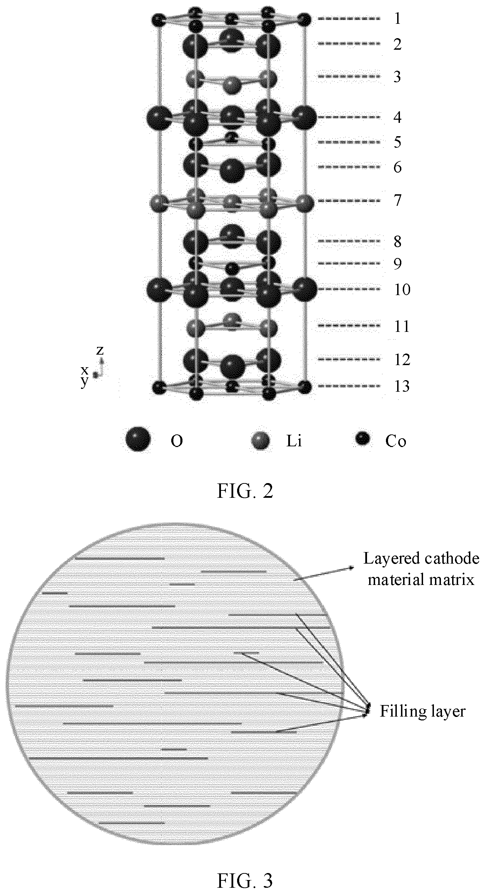

The layered cathode material matrix is shown in FIG. 2. FIG. 2 is a schematic diagram of a lattice structure of lithium cobalt oxide, which has a typical α-NaFeO₂ structure and belongs to a hexagonal crystal system and an R 3̅m space group. FIG. 2 shows a unit cell of a layered structure in the lattice structure of lithium cobalt oxide, and there are respectively cobalt-oxygen-lithium-oxygen-cobalt-oxygen-lithium-oxygen-cobalt-oxygen-lithium-oxygen-cobalt layers from top to bottom along a z-axis, which respectively correspond to numbers 1 to 13. Oxygen atoms form sphere packing, the cobalt layers and the lithium layers are alternately distributed on both sides of the oxygen layer. Cobalt and oxygen form a body layer having a strong covalent property. For example, the layers 4 to 6 and the layers 8 to 10 in FIG. 2 are body layers. Lithium is bound between body layers by an intermolecular force. As shown in FIG. 2, the seventh layer is a lithium-ion migration layer sandwiched between the CoO₂ plate layers. Due to weak intermolecular forces, under specific conditions, some atoms or molecules can break the intermolecular forces into the body layers by inserting, embedding, pillaring, and the like without damaging an entire layered structure. Optionally, the layered cathode material matrix is a single-crystal structure.

In addition, FIG. 3 is a schematic diagram of a structure of a lithium-ion battery cathode material having a defect layer according to an embodiment of this application.

The defect layer dispersed in the layered cathode material matrix has two possible structures: A first defect layer may include atoms with a periodic arrangement different from that of atoms in the matrix. In this case, element composition in the defect layer is the same as that of the matrix material, except that a periodic arrangement rule differs. In a second defect layer, a first element or a second element may be filled in a gap between body layers. In a third defect layer, ions formed by the first element or the second element may replace lithium ions, and ions in the body layer, so that the first element or the second element becomes rich in the lithium layer and the body layer. Specifically, when the ions formed by the first element replace the lithium ions, or cations in the body layer, the ions formed by the second element replace anions in the body layer. That the defect layer includes the first element or the second element means that the defect layer includes at least one of the first element and the second element. That is, any one of the first element and the second element exists in the defect layer, or both the first element and the second element exist in the defect layer. When the first element exists in the defect layer, content of the first element in the defect layer is greater than or equal to that in the layered cathode material matrix. When the second element exists in the defect layer, content of the second element in the defect layer is greater than or equal to that in the layered cathode material matrix.

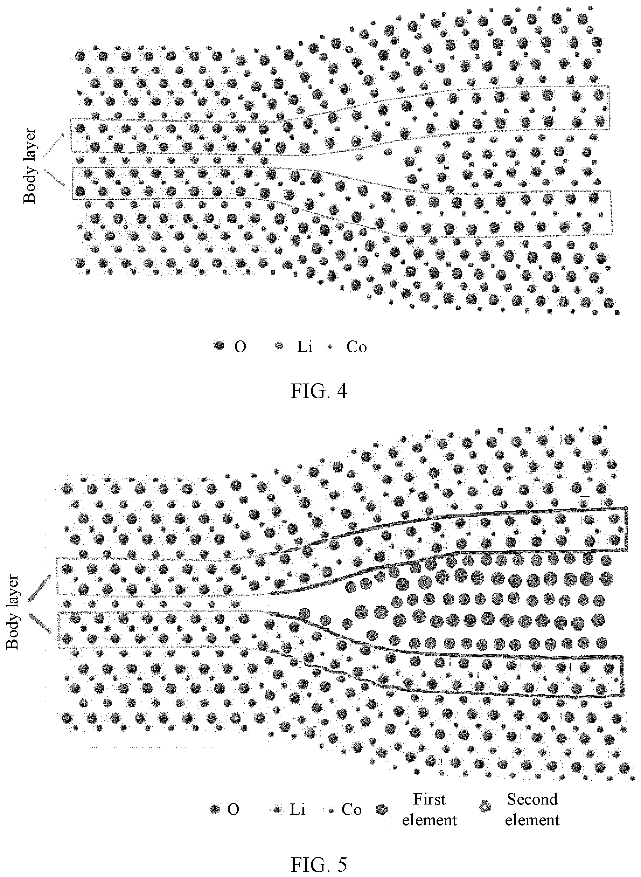

FIG. 4 is a schematic diagram of a structure of a defect layer of a cathode material according to an embodiment of this application. The defect layer includes atoms with a periodic arrangement different from that of atoms in a matrix material. In this case, element composition in the defect layer is the same as that of the matrix material, except that a periodic arrangement rule differs. The following is an implementation of forming a cathode material having the first defect layer in an embodiment of this application. To be specific, rapid cooling is applied during a primary sintering process of the cathode material, and because a surface and the inside of the cathode material have different cooling rates, different shrinkage stresses are generated in different positions, so as to form a large quantity of defects. Specifically, the defect is characterized in formation of a gap between body layers of the layered cathode material matrix.

FIG. 5 is a schematic diagram of a structure of a defect layer of another cathode material according to an embodiment of this application. In the defect layer, a filling first element or second element may fill a gap between body layers of the layered cathode material matrix. The following is an implementation of forming a cathode material having the first defect layer in an embodiment of this application. To be specific, rapid cooling is applied during a primary sintering process of the cathode material, and because a surface and the inside of the cathode material have different cooling rates, different shrinkage stresses are generated in different positions, so as to form a large quantity of defects. Specifically, the defect is characterized in formation of a gap between body layers of the layered cathode material matrix. During a secondary sintering process of the cathode material, a compound containing the first element or the second element absorbs heat energy, to generate kinetic energy of diffusion. Because the compound has a relatively small particle diameter and has strong diffusion kinetic energy, the compound gradually diffuses from a surface of the cathode material to a defect position along a gap of a crystal lattice, and fills the gap between the body layers of the layered cathode material matrix, so as to form a schematic diagram of a structure shown in FIG. 3. The formed defect layer is a compound containing the first element or the second element.

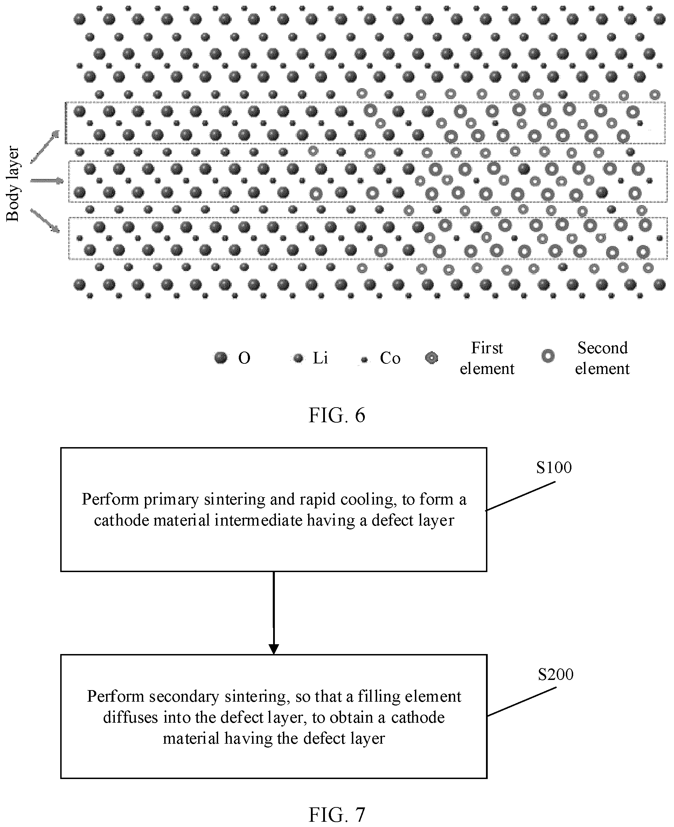

FIG. 6 is a schematic diagram of a structure of a defect layer of another cathode material according to an embodiment of this application. In the defect layer, ions of the first element or the second element may replace lithium ions, and ions in the body layer, so that the first element or the second element becomes rich in the lithium layer and the body layer. Specifically, the ions formed by the first element replace the lithium ions, or cations in the body layer, and the ions formed by the second element replace anions in the body layer. The following is an implementation of forming a cathode material having the another defect layer in an embodiment of the present invention. Similarly, rapid cooling is applied during a primary sintering process of the cathode material, and because a surface and the inside of the cathode material have different cooling rates, different shrinkage stresses are generated in different positions, so as to form a large quantity of defects. Specifically, the defect is characterized in formation of a gap between body layers of the layered cathode material matrix. During a secondary sintering process of the cathode material, a compound containing the first element or the second element absorbs heat energy, to generate kinetic energy of diffusion. As described above, the compound gradually diffuses from a surface of the cathode material to a defect position along a gap of a lattice, and fills the gap between the body layers of the layered cathode material matrix. When a time of the secondary sintering is properly prolonged or a temperature of the secondary sintering is increased, the first element or the second element entering the defect layer further diffuses into the layered cathode material matrix, and at the same time, the defect in the layered cathode material matrix is further healed. In this way, the ions formed by the first element or the second element diffuse to replace the lithium ions, and the ions in the body layer, so that the first element or the second element becomes rich in the lithium layer and the body layer, as shown in FIG. 6. Because elements in the layered cathode material matrix, and the first element or the second element may mutually diffuse, the formed defect layer includes the elements in the layered cathode material matrix, and the first element or the second element.

It can be understood that the three different existence forms of the defect layer dispersed in the layered cathode material matrix may coexist in the layered cathode material matrix or may exist separately in the layered cathode material matrix. The existence form of the defect layer depends on properties of the cathode material and a preparation method.

It can be understood that, for a lithium-ion battery cathode material provided in an embodiment of the present invention, the lithium-ion battery cathode material includes a layered cathode material matrix, and the layered cathode material matrix includes a body layer and a defect layer dispersed in the layered cathode material matrix. The defect layer may include atoms or hole layers with a periodic arrangement different from that of atoms or hole layers in a matrix material, or may include a first element or a second element. Because ions of the first element do not have strong oxidizing properties, different from cobalt ions, the ions of the first element are not dissolved even in a strong oxidizing environment of being in contact with an electrolyte. In addition, a compound formed after ions of the first element or the second element are filled is not easy to have an oxidation-reduction reaction within a charge/discharge voltage range, and has no lithium intercalation capability. Therefore, after the compound enters the defect, a filling material does not expand or shrink in volume to deform with the matrix material, so that an overall crystal structure of the cathode material is more stable. In addition, in a charge/discharge process, the defect layer is more stable than the cathode material, which can hinder generation and expansion of dislocation in the charge/discharge process, and suppress cracking of the layered structure of the matrix material. Therefore, a particle of the cathode material is not easy to crack in a cycling process, thereby improving cycling performance of the cathode material.

It should be noted that, according to the defect layer of the cathode material provided in this embodiment of the present invention, the defect layer includes the first element or the second element, and when the first element and the second element coexist in the defect layer, an ionic bond is formed between the first element and the second element. Bond energy of the ionic bond formed between the first element and the second element is greater than bond energy of an ionic bond formed between transition metal and oxygen in the layered cathode material matrix. Therefore, the first element and the second element first diffuse inward along a grain boundary, because this is a path with least energy consumption. Due to the existence of a gap layer in a cathode material intermediate, these defect sites have high reactivity, and therefore, the first element or the second element becomes preferentially rich at these positions, so as to obtain the cathode material with the defect layer located between the body layers. When the first element and the second element of the defect layer further diffuse into the layered cathode material matrix, the defect in the layered cathode material matrix is further healed, so that ions formed by the first element or the second element diffuse to replace lithium ions, or ions in the body layer, and the first element and the second element become rich in the lithium layer and the body layer. Optionally, the first element may replace lithium ions, or cations in the body layer, and the ions formed by the second element replace anions in the body layer. When the first element exists in the defect layer, content of the first element in the defect layer is greater than or equal to that in the layered cathode material matrix. When the second element exists in the defect layer, content of the second element in the defect layer is greater than or equal to that in the layered cathode material matrix.

If the defect layer includes the first element or the second element, the first element or the second element may be selected as follows: The first element may be at least one of Mg, Al, Ni, Mn, Ca, Fe, Ga, Ti, Mo, or W, and the second element may be at least one of F, Cl, C, or S. Optionally, electronegativity of the second element is higher than electronegativity of the oxygen element.

Dimensions of the defect layer are greater than or equal to 0.1 nm and less than or equal to 10 nm in at least a first direction, and greater than or equal to 10 nm and less than or equal to 2000 nm in at least a second direction.

In addition, the defect layer is parallel to a 003 crystal plane of the layered cathode material matrix.

According to the cathode material having two structure types of the defect layer provided in this embodiment of this application, when the defect layer includes the first element, the first element meets the following condition: an ion radius of the ions formed by the first element is close to an ion radius of M in a cathode material LiMO₂ (M is one or any combination of Co, Ni, and Mn). Optionally, the ion radius of the ions formed by the first element ranges from 0.04 nm to 0.08 nm.

In addition, when the first element and the second element exist in the defect layer, bond energy of an ionic bond formed between the first element and the second element is greater than bond energy of an ionic bond formed between the transition metal and oxygen in the layered cathode material matrix, so that the first element and the second element form a stable compound in the cathode material, and the compound is not easy to oxidize or reduce.

An embodiment of this application further provides a method for preparing a lithium-ion battery cathode material. A flowchart of the method is shown in FIG. 7, and the method includes the following steps.

Step S100: Perform primary sintering and rapid cooling, to form a cathode material intermediate having a defect layer.

Fully mix a cathode material precursor and a lithium source according to a specific molar ratio. Place them in a muffle furnace or a sintering furnace for the primary sintering at a high temperature, and perform rapid cooling. Then grind the product to obtain a primary sintering intermediate, namely, the cathode material with defects between layers (there is a gap between the body layers). In a rapid cooling process, because a surface and the inside of the cathode material have different cooling rates, different shrinkage stresses are generated in different positions, so as to form a large quantity of defects. Specifically, the defects are in a form of a gap layer between the body layers. It can be understood that because covalent bonds are formed between atoms inside the body layer, and van der Waals forces mainly exist between the body layer and the lithium-ion, stability between the body layer and the lithium-ion is less than stability inside the body layer. Therefore, most of these defects are generated between the body layers of the cathode material.

Step S200: Perform secondary sintering, so that a first element or a second element diffuses into the defect layer, to obtain the cathode material having the defect layer.

Fully mix the cathode material intermediate and a compound containing the first element or the second element. Place them in a muffle furnace or a sintering furnace for secondary sintering at a high temperature. Then grind the product to obtain a final product, namely, the cathode material having the defect layer. A structure shown in FIG. 4 is formed.

During the secondary sintering, the filling first element or second element enters a defect gathering position, to form the lithium-ion battery cathode material having the defect layer. A specific implementation method is: uniformly mixing the compound containing the first element or the second element and the cathode material intermediate, and performing the secondary sintering. During the secondary sintering, the first element or the second element absorbs heat energy to generate diffusion kinetic energy.

Because the compound containing the first element or the second element has relatively small particle diameter and has strong diffusion kinetic energy, the compound gradually diffuses from a surface to a defect position along a lattice gap to replace a part of the lithium layer, so as to fill the gap between the body layers of the layered cathode material matrix. A structure shown in FIG. 5 is formed.

When the temperature of the secondary sintering is high enough or a heat preservation time is long enough, an element in the body layer around the defect also diffuses to an extent, so as to form a repair action for the defect. In this case, the first element or the second element replaces ions in the lithium layer and the body layer to form mutual diffusion. The first element or the second element becomes rich in the lithium layer and the body layer. A structure shown in FIG. 6 is formed.

Optionally, in step 1, the cathode material precursor is at least one of cobalt tetroxide, cobalt carbonate, cobalt hydroxide, cobalt oxyhydroxide, or a nickel-cobalt-manganese ternary hydroxide precursor.

Optionally, in step 1, the lithium source is a lithium-containing compound or a combination thereof. Optionally, the lithium source is at least one of lithium hydroxide, lithium nitrate, lithium carbonate, lithium oxalate, lithium acetate, lithium oxide, or lithium citrate, and may be preferably selected from lithium carbonate and lithium hydroxide.

Optionally, in step 1, the temperature of the high-temperature primary sintering is 800°C to 1100°C, and a sintering time is 8 to 20 hours. Preferably, the temperature of the high-temperature primary sintering is 1000°C to 1050°C, and the sintering time is 10 to 18 hours.

Optionally, in step 1, a rate of the rapid cooling is greater than or equal to 5°C/min, and preferably, the rate of the rapid cooling is greater than or equal to 10°C/min.

Optionally, in step 2, the temperature of the high-temperature secondary sintering is 600°C to 1000°C, and a sintering time is 6 to 12 hours. Preferably, the temperature of the high-temperature secondary sintering is 800°C to 950°C, and the sintering time is 8 to 10 hours.

Optionally, in step 2, the first element or the second element includes the first element or the second element, the first element is at least one of Mg, Al, Ni, Mn, Ca, Fe, Ga, Ti, Mo, or W, and the second element is at least one of F, Cl, C, or S. Optionally, electronegativity of the second element is higher than electronegativity of the oxygen element.

Optionally, in step 2, the compound containing the first element or the second element includes at least one of: lithium fluoride, magnesium fluoride, aluminum fluoride, nickel fluoride, manganese fluoride, calcium fluoride, iron fluoride, gallium fluoride, titanium fluoride, molybdenum fluoride, tungsten fluoride, lithium chloride, magnesium chloride, aluminum chloride, nickel chloride, manganese fluoride, calcium chloride, ferric chloride, gallium chloride, titanium chloride, molybdenum chloride, tungsten chloride, lithium carbonate, magnesium carbonate, aluminum carbonate, nickel carbonate, manganese carbonate, calcium carbonate, iron carbonate, titanium carbonate, lithium sulfide, magnesium sulfide, aluminum sulfide, nickel sulfide, manganese sulfide, calcium sulfide, titanium sulfide, molybdenum sulfide, tungsten sulfide, lithium oxide, magnesium oxide, aluminum oxide, nickel oxide, manganese oxide, calcium oxide, iron oxide, gallium oxide, titanium oxide, molybdenum oxide, tungsten oxide, lanthanum fluoride, lanthanum chloride, lanthanum sulfide, zinc fluoride, zinc chloride, zinc carbonate, zinc sulfide, zinc oxide, boron fluoride, boron chloride, boron oxide, tin fluoride, tin chloride, tin oxide, tin carbonate, tin sulfide, lithium phosphate, magnesium phosphate, aluminum phosphate, or iron phosphate. Preferably, the compound containing the first element or the second element includes lithium fluoride, magnesium fluoride, aluminum fluoride, nickel fluoride, manganese fluoride, calcium fluoride, iron fluoride, gallium fluoride, titanium fluoride, molybdenum fluoride, tungsten fluoride, zinc fluoride, boron fluoride, tin fluoride, alumina oxide, iron oxide, titanium oxide, molybdenum oxide, tungsten oxide, zinc oxide, boron oxide, or tin oxide.

In addition, a particle diameter of the compound containing the first element or the second element does not exceed 500 nm. Preferably, the particle diameter of the compound containing the first element or the second element does not exceed 100 nm.

The following further describes the present invention in detail with reference to embodiments of this application. However, implementations of the present invention are not limited thereto.

### Embodiment 1

A lithium cobalt oxide cathode material is provided with a defect layer including atoms with content different from that of an element in a matrix. The defect layer includes elements Mg and F, and the lithium cobalt oxide layered cathode material matrix is LiCo_{0.99}Al_{0.01}O₂. A method for preparing the layered cathode material matrix includes the following steps:

Uniformly mix a Co₃O₄ precursor doped with 1% molar content of Al and lithium carbonate in a molar ratio of Li: Co=1.05. Place them in a muffle furnace at 1050°C for 12 hours. Control a cooling rate to be 10°C/min until a temperature is cooled to the room temperature. Grind the sintered product to obtain a lithium cobalt oxide matrix material LiCo_{0.99}Al_{0.01}O₂.

Uniformly mix the lithium cobalt oxide matrix material and magnesium fluoride in a molar ratio of 100:0.5. Place them in a muffle furnace at 900°C for 6 hours. Then grind the sintered product to obtain a lithium cobalt oxide cathode material 0.05MgF₂·LiCo_{0.99}Al_{0.01}O₂ having a defect layer.

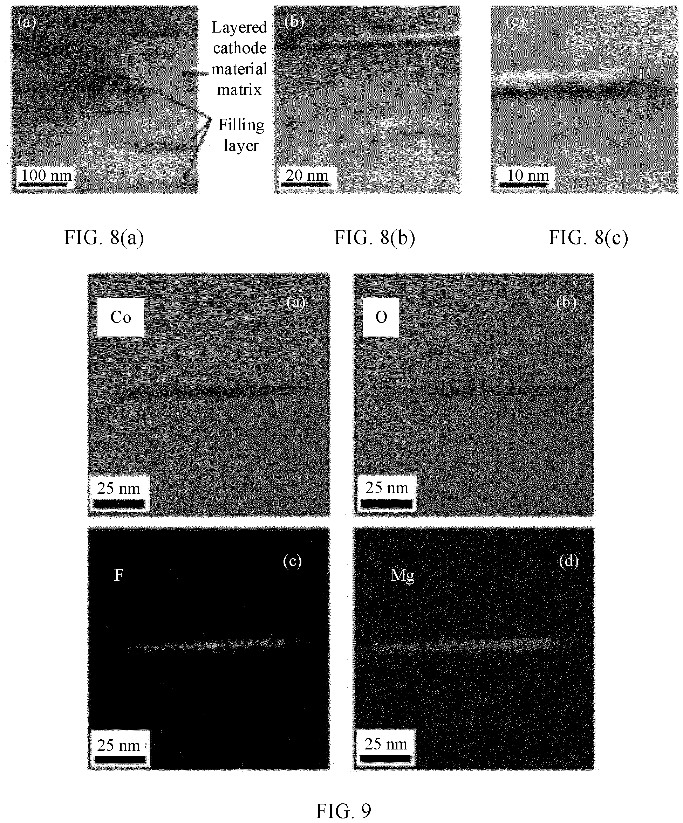

The prepared lithium cobalt oxide cathode material is represented by using a high angle annular dark field (HAADF, High Angle Annular Dark Field) imaging mode of a scanning transmission electron microscope (STEM, scanning transmission electron microscope). It can be found that there are a large quantity of defect layer structures in a lithium cobalt oxide main phase, a lateral dimension of which is 30 to 200 nm and a longitudinal dimension of which is 1 to 10 nm, as shown in FIG. 8(a). After a region in a block of the figure is enlarged, it can be seen that a structure of the defect layer is parallel to a 003 crystal plane of the layered cathode material matrix. In the HAADF mode of the STEM diagram, a contrast of the structure of the defect layer is different from that of the matrix material, which indicates that element composition or a periodic arrangement order of the defect layer is different from that of the matrix material, as shown in FIG. 8(b) and FIG. 8(c).

Energy-dispersive X-ray spectrum (EDS, Energy-Dispersive X-ray spectroscopy) analysis is performed on the defect layer and the layered cathode material matrix around the defect layer. As shown in FIG. 9, a black color in the defect layer in FIG. 9(a) and FIG. 8(b) indicates that Co and O are poor, and a white color in the defect layer in FIG. 9(c) and FIG. 8(d) indicates that Mg and F are rich, indicating that the first or second elements Mg and F substantially replace Co and O in the body layer at this position.

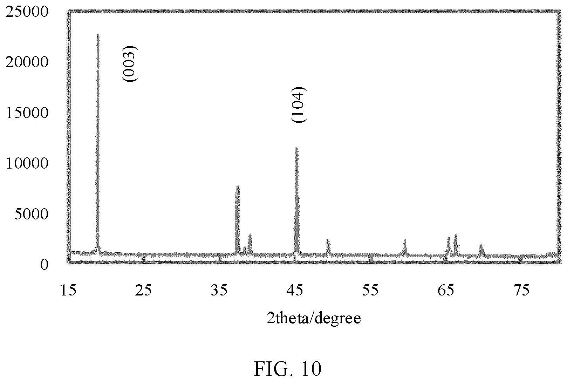

FIG. 9 shows an X-ray diffraction spectrum obtained by using a Bruker D8 Advance X-ray diffractometer for a lithium cobalt oxide cathode material having a defect layer in this embodiment. An interlayer spacing, namely, a c-axis dimension, of the cathode material can be calculated from a diffraction angle of a peak (003). A diffraction angle (2theta) corresponding to the peak (003) in FIG. 10 is 18.88°, and it can be calculated that the c-axis dimension is 14.08Å. Compared with a c-axis dimension (14.0516Å, atomic resolution of lithium ions in LiCoO₂, Nat. Mater. 2003, 2(7), 464-7) of lithium cobalt oxide without a defect layer, the c-axis dimension of the lithium cobalt oxide cathode material in this embodiment is correspondingly larger because of the structure of the defect layer.

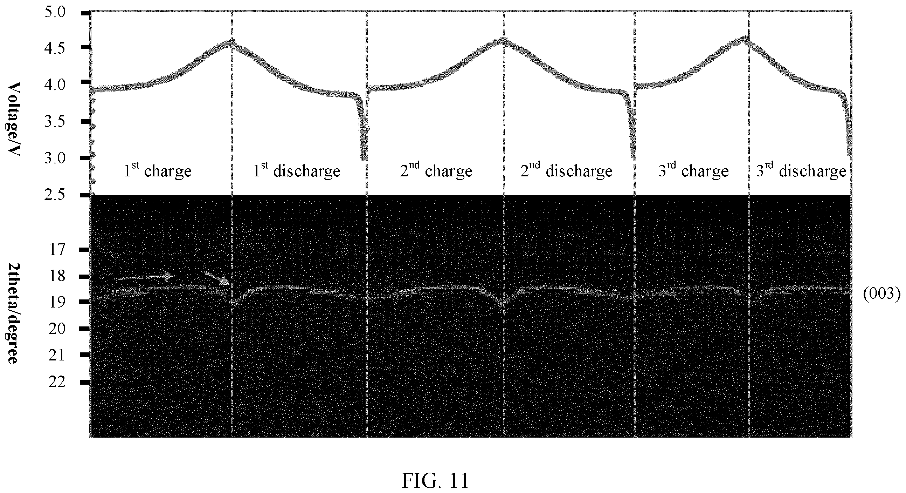

FIG. 11 shows in-situ experimental data obtained by using a Bruker D8 Advance X-ray diffractometer (X-ray diffraction, XRD) for a lithium cobalt oxide cathode material having a defect layer in this embodiment. Charge and discharge are performed on the cathode material at 3.0 V to 4.6 V, and at the same time, X-ray diffraction data is recorded. A peak between 18° and 20° changes to a (003) crystal plane characteristic peak. From this figure, (003) characteristic peaks corresponding to 2theta angles at different charge/discharge stages can be seen, so that an interplanar spacing of the (003) crystal plane of the cathode material at different charge/discharge stages can be calculated. A change of the interplanar spacing represents structural stability of the cathode material to an extent. In a charge process, the peak (003) first shifts toward a low angle and then rapidly shifts toward a high angle (as shown by the arrow in FIG. 10), indicating that a volume of the lithium cobalt oxide cathode material having the defect layer in this embodiment first expands and then shrinks. A change of the interplanar spacing in a discharge process is opposite thereto. After three charge-discharge cycles, the peak (003) of the cathode material is not obviously shifted. It indicates that the layer spacing of the cathode material is not greatly changed and the layered structure is complete. No other characteristic peaks appear, indicating that no irreversible phase transition occurs. It can be seen from the above that the structure of the defect layer formed by the cathode material in Embodiment 1 of this application can reduce an extent to which the volume of the matrix material expands or shrinks to deform, and have a function of stabilizing the structure of the lithium battery cathode material structure.

Embodiment 1 of this application provides a lithium cobalt oxide cathode material having a defect layer, and the defect layer includes MgF₂. Through process adjustment, the lithium cobalt oxide cathode material having the defect layer including only Mg or F can be implemented, so as to reduce an extent to which the volume of the matrix material expands or shrinks to deform, and has a function of stabilizing the structure of the lithium battery cathode material structure.

### Embodiment 2

A lithium cobalt oxide cathode material is provided with a defect layer. The defect layer includes atoms with a periodic arrangement different from that of atoms in a matrix, and the lithium cobalt oxide layered cathode material is LiCo_{0.99}Al_{0.01}O₂. A method for preparing the layered cathode material includes the following steps:

Uniformly mix a Co₃O₄ precursor doped with 1% molar content of Al and lithium carbonate in a molar ratio of Li:Co=1.05. Place them in a muffle furnace at 1050°C for 12 hours. Control a cooling rate to be 10°C/min until a temperature is cooled to the room temperature. Grind the sintered product to obtain a lithium cobalt oxide matrix material LiCo_{0.99}Al_{0.01}O₂.

Place the lithium cobalt oxide matrix material for sintering in a muffle furnace at 900°C for 6 hours. Then grind the sintered product to obtain the lithium cobalt oxide cathode material LiCo_{0.99}Al_{0.01}O₂ having the defect layer.

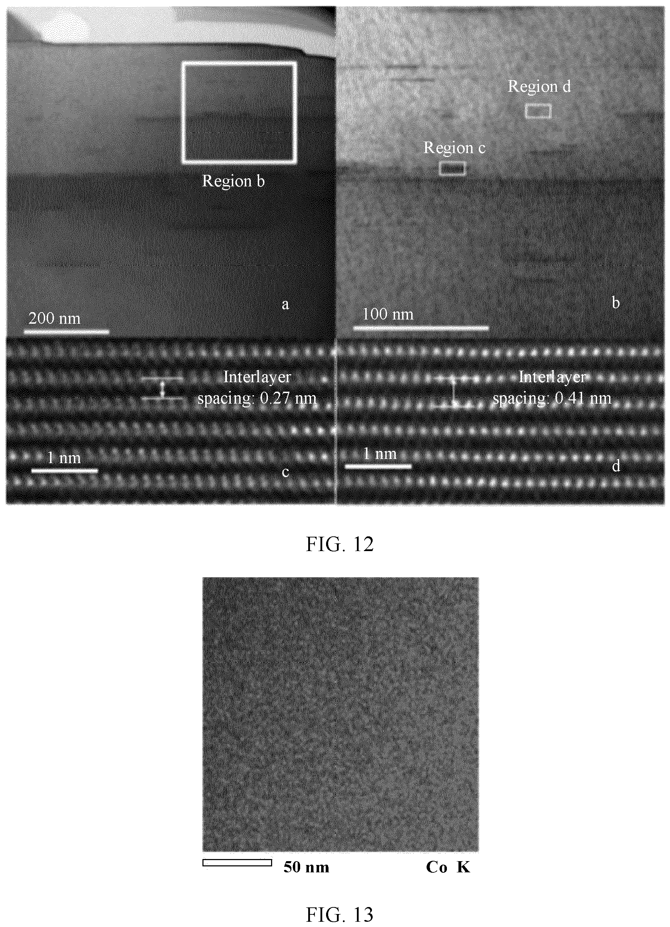

The prepared lithium cobalt oxide cathode material is represented by using a high angle annular dark field (HAADF, High Angle Annular Dark Field) imaging mode of a scanning transmission electron microscope (STEM, scanning transmission electron microscope). It can be found that there are a large quantity of defect layer structures in a lithium cobalt oxide main phase, a lateral dimension of which is 30 to 800 nm and a longitudinal dimension of which is 1 to 10 nm, as shown in FIG. 12(a). After a region in a block of the figure is enlarged, it can be seen that a structure of the defect layer is parallel to a 003 crystal plane of the layered cathode material matrix. In the HAADF mode of the STEM diagram, a contrast of the structure of the defect layer is different from that of the matrix material, which indicates that element composition or a periodic arrangement order of the defect layer is different from that of the matrix material, as shown in FIG. 12(b). A region c having the defect layer and a region d of a matrix region having no defect layer in FIG. 12(b) are further enlarged. It can be seen that white spots represent atoms of transition metal of a body layer. In the defect layer in FIG. 12(c), the atoms of the transition metal are arranged in two upper/lower layers of dislocation. In the matrix layer in FIG. 12(d), there is no obvious dislocation. It can be seen that periodic arrangements of atoms are different between the defect layer and the matrix layer. It can be learned, through measurement of interlayer spacings in the defect layer in FIG. 12(c) and the matrix layer in FIG. 12(d), that the interlayer spacing in the defect layer is 0.27 nm, and the interlayer spacing in the matrix layer is 0.41 nm.

Energy-dispersive X-ray spectrum (EDS, Energy-Dispersive X-ray spectroscopy) analysis is performed on the defect layer and the layered cathode material matrix around the defect layer. As shown in FIG. 13, Co distribution in the defect layer in FIG. 13 is uniform, indicating that content of a first element or a second element in the defect layer is equal to that in the matrix material.

### Embodiment 3

A high-nickel ternary cathode material is provided with a defect layer. The defect layer includes AlF₃, and the lithium cobalt oxide layered cathode material matrix is LiNi_{0.8}Co_{0.1}Mn_{0.1}O₂. A method for preparing the layered cathode material matrix includes the following steps:

Uniformly mix nickel sulfate, cobalt sulfate, and manganese sulfate in a molar ratio of Ni:Co:Mn=0.8:0.1:0.1 to obtain 1.0-mol/L mixed solution A. Obtain 200 g of a sodium hydroxide solution with the concentration of 20% and 200 g of deionized water, and uniformly stir them to obtain a 5-mol/L mixed solution B. Obtain 100 g of concentrated ammonia water with the concentration of 20% and 150 g of deionized water, and uniformly stir them to obtain a 3.8-mol/L mixed solution C. Obtain 300 g, 400 g and 100 g of the mixed solutions A, B and C respectively, add 1300 g of pure water into a reactor, and simultaneously add the mixed solutions A, B and C into a reaction vessel. Stirring of the reaction vessel is controlled at 600 rpm/min. The entire reaction process needs to be protected by inputting nitrogen at a flow rate of 15 L/min, a reaction temperature is kept at 50°C, a pH value is kept at 8.5, and a reaction time is 45 hours. After the reaction is completed, the slurry is filtered by suction, washed, and dried to obtain a nickel-cobalt-manganese material precursor with a particle diameter of 5 µm.

Obtain 300 g of lithium carbonate and the precursor in a molar ratio of 1.02:1 for mixing. Place the uniformly mixed materials in an oxygen atmosphere furnace at a sintering temperature of 850°C and a calcining time of 16 hours. Control a cooling rate to be 15°C/min until a temperature is cooled to the room temperature. Place the sintered material in an airflow mill for grinding, to obtain a single-crystal LiNi_{0.8}Co_{0.1}Mn_{0.1}O₂ ternary material.

Uniformly mix a matrix material of the single-crystal ternary material and lanthanum fluoride in a molar ratio of 100:0.2. Place them in a muffle furnace at 900°C for 10 hours. Then grind the sintered product to obtain a high-nickel ternary cathode material 0.002AlF₃·LiNi_{0.8}Co_{0.1}Mn_{0.1}O₂ having the defect layer.

Embodiment 2 of this application provides a high-nickel ternary cathode material having a defect layer, and the defect layer includes AlF₃. Through process adjustment, the high-nickel ternary cathode material having the defect layer including only Al or F can be implemented, so as to reduce an extent to which the volume of the matrix material expands or shrinks to deform, and has a function of stabilizing the structure of the lithium battery cathode material structure.

### Embodiment 4

A lithium-rich manganese-based cathode material is provided with a defect layer. The defect layer includes TiO₂, and the lithium-rich manganese-based layered cathode material matrix is LiNi_{0.8}Co_{0.1}Mn_{0.1}O₂. A method for preparing the layered cathode material matrix includes the following steps:

Uniformly mix nickel sulfate, cobalt sulfate, and manganese sulfate in a molar ratio of Ni:Co:Mn=0.21:0.12:0.67. Dissolve them in deionized water to obtain a mixed solution with a total concentration of metal elements of 2 mol/L. Obtain a solution of sodium carbonate with a concentration of 0.2 mol/L, and drip it into the mixed solution slowly with stirring at the same time. Control a reaction pH value to be 11, a reaction temperature to be 60°C, and a reaction time to be 40 hours. After the reaction is completed, the slurry is filtered by suction, washed, and dried at 120°C for 24 hours. Then perform sintering in air atmosphere at 500°C for 5 hours to obtain a nickel-cobalt-manganese mixed precursor with a particle diameter of 5 µm.

Obtain 300 g of lithium hydroxide and the nickel-cobalt-manganese mixed precursor in a molar ratio of 1.122:1, and uniformly mix them. Place the mixed materials in a muffle furnace at a sintering temperature of 900°C in air atmosphere for 14 hours. Control a cooling rate to be 17°C/min until a temperature is cooled to the room temperature. Then place the obtained material in an airflow mill for grinding, to obtain a lithium-rich manganese-based material Li[Li_{0.17}Ni_{0.17}Co_{0.10}Mn_{0.56}]O₂.

Uniformly mix the lithium-rich manganese-based material and titanium dioxide in a molar ratio of 100:0.5. Place them in a muffle furnace at 900°C for 10 hours. Then grind the sintered product to obtain a lithium-rich manganese-rich material 0.005TiO₂·Li[Li_{0.17}Ni_{0.17}Co_{0.10}Mn_{0.56}]O₂ having the defect layer.

### Comparative Embodiment 1

A lithium cobalt oxide cathode material MgF₂ ·LiCo_{0.99}Al_{0.01}O₂ is provided without a defect layer. A method for preparing the lithium cobalt oxide cathode material includes the following steps:

Uniformly mix a Co₃O₄ precursor doped with 1% molar content of a first element 1 and lithium carbonate in a molar ratio of Li:Co=1.05. Place them in a muffle furnace at 1050°C for 12 hours. Apply natural cooling until a temperature is cooled to the room temperature. Grind the sintered product to obtain a lithium cobalt oxide matrix material LiCo_{0.99}Al_{0.01}O₂.

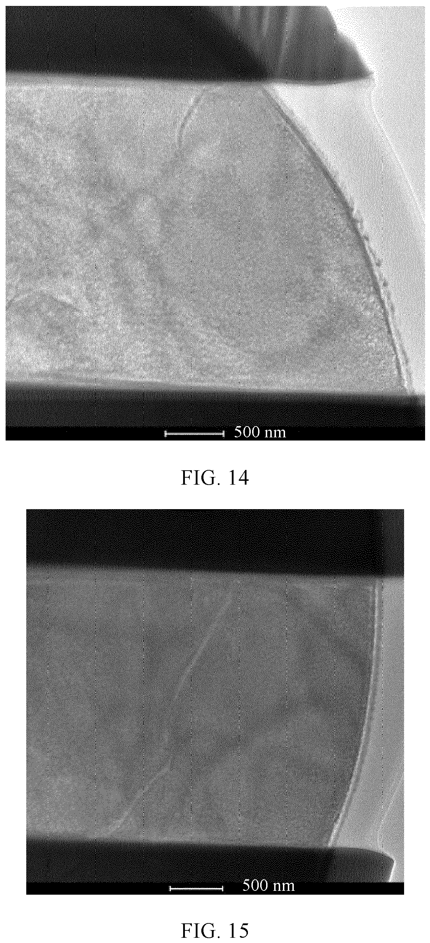

Uniformly mix a lithium cobalt oxide matrix material and magnesium fluoride in a molar ratio of 100:0.5. Place them in a muffle furnace at 900°C for 6 hours. Then grind the sintered product to obtain a lithium cobalt oxide cathode material 0.05MgF₂·LiCo_{0.99}Al_{0.01}O₂. As shown in FIG. 14, STEM analysis is performed on the lithium cobalt oxide cathode material in Comparative Embodiment 1, and no defect layer structure was found in a main phase structure.

### Comparative Embodiment 2

A lithium cobalt oxide cathode material 0.05La₂O₃·LiCo_{0.99}Al_{0.01}O₂ is provided without a defect layer. A method for preparing the lithium cobalt oxide cathode material includes the following steps:

Uniformly mix a Co₃O₄ precursor doped with 1% molar content of Al and lithium carbonate in a molar ratio of Li:Co=1.05. Place them in a muffle furnace at 1050°C for 12 hours. Control a cooling rate to be 10°C/min until a temperature is cooled to the room temperature. Grind the sintered product to obtain a lithium cobalt oxide matrix material LiCo_{0.99}Al_{0.01}O₂.

Uniformly mix a lithium cobalt oxide matrix material and lanthanum oxide in a molar ratio of 100:0.5. Place them in a muffle furnace at 900°C for 6 hours. Then grind the sintered product to obtain a lithium cobalt oxide cathode material 0.05La₂O₃·LiCo_{0.99}Al_{0.01}O₂. As shown in FIG. 15, STEM analysis is performed on the lithium cobalt oxide cathode material in Comparative Embodiment 2, and no defect layer structure was found in a main phase structure.

Sequentially add a mass percentage of 96% of lithium-ion batteries respectively prepared from the lithium-ion battery cathode materials in Examples 1 to 3 and Comparative Embodiments 1 and 2, a mass percentage of 2% of polyvinylidene fluoride (PVDF), and a mass percentage of 2% of a conductive agent super P to N-methylpyrrolidone (NMP). Fully stir and uniformly mix them to obtain slurry. Coat slurry on an aluminum foil current collector. Perform drying, cold pressing, and cutting to obtain a cathode plate.

Sequentially add a mass percentage 1.5% of CMC, a mass percentage 2.5% of SBR, a mass percentage 1% of acetylene black, and a mass percentage 95% of graphite to deionized water. Fully stir and uniformly mix them to obtain slurry. Coat slurry on a copper foil current collector. Perform drying, cold pressing, and cutting to obtain an anode plate.

Use the prepared cathode plate and anode plate and a commercial PP/PE/PP three-layer separator to prepare a battery cell. Use a polymer for packing, and pour the prepared electrolyte. Prepare a soft pack lithium secondary battery with the 3.8 first element h by using a process such as a chemical process.

Under a condition of 25°C ± 5°C, charge and discharge the battery for 300 cycles at a charge/discharge rate of 2C/0.7C in a voltage range of 3.0 V to 4.5 V. Measure discharge capacity at the first cycle and discharge capacity at the 300^{th} cycle. Solve a capacity retention rate after the cycles. Capacity retention rate after the cycles = (Discharge capacity at the 300^{th} cycle)/(Discharge capacity at the first cycle) × 100%.

Under a condition of 45°C ± 5°C, charge and discharge the battery for 300 cycles at a charge/discharge rate of 2C/0.7C in a voltage range of 3.0 V to 4.5 V. Measure discharge capacity at the first cycle and discharge capacity at the 300^{th} cycle. Solve a capacity retention rate after the cycles. Capacity retention rate after the cycles = (Discharge capacity at the 300^{th} cycle)/(Discharge capacity at the first cycle) × 100%.

Perform a 24-hour 70°C high-temperature storage test on the battery at 25°C ± 5°C. Perform one charge/discharge cycle at a charge/discharge rate of 0.7 C/0.5 C at 3.0 V to 4.5 V, and record the initial battery capacity. Recharge the battery to 4.5 V at 0.7C and record initial thickness. Keep a battery module open-circuited at 70°C ± 2°C for 24 hours and immediately test thermal thickness. Keep the battery module open-circuited at room temperature for 2 hours and test cooling thickness. Then, discharge the battery with a constant current at 0.5 C to an end-of-discharge voltage 3.0 V, and record a remaining capacity. Perform three charge/discharge cycles at a charge/discharge rate of 0.7 C/0.5 C, and record a restored capacity.

Results of the foregoing battery tests are listed in Table 1.

| Battery test item | Embodiment 1 | Embodiment 2 | Embodiment 3 | Embodiment 4 | Comparative Embodiment 1 | Comparative Embodiment 2 |
|---|---|---|---|---|---|---|
| | 0.05MgF₂·LiCo_{0.99}Al_{0.01}O₂ having a defect layer filled with elements Mg and F | LiCo_{0.99}Al_{0.01}O₂ having a defect layer filled without a first element or a second element | 0.002AlF₃·LiNi_{0.8}Co_{0.1}Mn_{0.1} O₂ having a defect layer filled with elements Al and F | 0.005TiO₂·Li[Li_{0.17}Ni_{0.17}Co_{0.1 0}Mn_{0.56}]O₂ having a defect layer filled with the element Ti | 0.05MgF₂·LiCo_{0.99}Al_{0. 01}O₂ having no defect layer | 0.05Al₂O₃·LiCo _{0.99}Al_{0.01}O₂ having no defect layer |
| Capacity retention rate at 25°C for 300 cycles | 93% (3.0 V to 4.5 V) | 90% (3.0 V to 4.5 V) | 92.1% (3.0 V to 4.3 V) | 91.3% (3.0 V to 4.5 V) | 85% (3.0 V to 4.5 V) | 82% (3.0 V to 4.5 V) |
| Capacity retention rate at 45°C for 300 cycles | 88% (3.0 V to 4.5 V) | 85% (3.0 V to 4.5 V) | 86.6% (3.0 V to 4.3 V) | 84.8% (3.0 V to 4.5 V) | 75% (3.0 V to 4.5 V) | 70% (3.0 V to 4.5 V) |
| Thermal measurement thickness expansion rate at 70°C for 24 hours | 2% | 3.5% | 2.5% | 2.9% | 9% | 12% |
| Cold measurement thickness expansion rate at 70°C for 24 | 1.10% | 1.30% | 1.3% | 1.6% | 3.10% | 5.0% |
| hours | | | | | | |
| Capacity retention rate at 70°C for 24 hours | 90.2% | 88.7% | 80.6% | 89.1% | 85.2% | 80.6% |
| Capacity recovery rate at 70°C for 24 hours | 95.0% | 93.6% | 85.4% | 93.7% | 88.6% | 85.4% |

It can be learned from Table 1 that the charge-discharge cycling performance of the lithium battery prepared by using the cathode material having the defect layer in Embodiments 1 to 3 of the present invention is significantly improved at 3.0 V to 4.5 V. In comparison with Comparative Embodiments 1 and 2, it is found that the lithium-ion battery including the lithium cobalt oxide 0.05MgF₂·LiCo_{0.99}Al_{0.01}O₂ cathode material having the defect layer has a capacity retention rate of 93% at 25°C ± 5°C after 300 cycles, and has a capacity retention rate of 88% at 45°C ± 5°C after 300 cycles. The lithium-ion battery including the lithium cobalt oxide 0.05MgF₂·LiCo_{0.99}Al_{0.01}O₂ cathode material having no defect layer and the lithium-ion battery including the lithium cobalt oxide 0.05 LA₂O₃·LiCo_{0.99}Al_{0.01}O₂ cathode material having no defect layer respectively have capacity retention rates of 85% and 82% at 25°C ± 5°C after 300 cycles, and respectively have respective decreased capacity retention rates of 75% and 70% at 45°C ± 5°C after 300 cycles. It can be seen from the results that cycling performance of the cathode material having the defect layer at high voltages at different temperatures is significantly improved when compared with that of the cathode material having no defect layer. This is mainly because the filling material can hinder the generation and expansion of dislocations in the charging and discharging processes, and suppress the cracking of the layered structure of the matrix material, and the cathode material is not likely to crack in the cycling process. This improves the cycling performance of the cathode material.

In Embodiment 2 and Embodiment 3 of the present invention, a lithium nickel manganese cobalt oxide ternary material 0.002AlF3·LiNi_{0.8}Co_{0.1}Mn_{0.1}O₂ having a heterogeneous defect layer and a lithium-rich manganese-based material 0.005TiO₂·Li[Li_{0.17}Ni_{0.17}Co_{0.10}Mn_{0.56}]O₂ having a heterogeneous defect layer are respectively prepared. The electrochemical performance of the lithium battery using the cathode material prepared by using the methods in Embodiment 2 and Embodiment 3 is tested. The specific performance is listed in Table 1.

It can be seen from the results that cycling performance of the cathode material having the heterogeneous defect layer at high voltages at different temperatures is significantly improved when compared with that of the cathode material having no heterogeneous defect layer. This is mainly because the heterogeneous filling material can hinder the generation and expansion of dislocations in the charging and discharging processes, and suppress the cracking of the layered structure of the matrix material, and the cathode material is not likely to crack in the cycling process. This improves the cycling performance of the cathode material.

### Embodiment 5

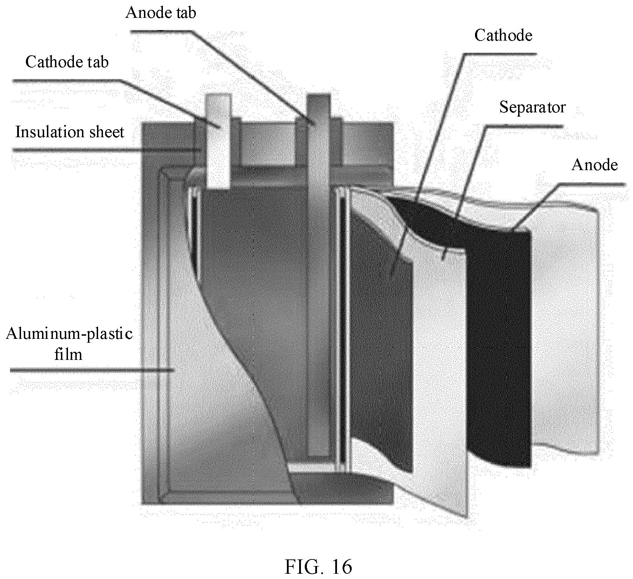

Embodiment 5 of the present invention further provides a lithium-ion battery including a cathode material having a defect layer. As shown in FIG. 16, the lithium-ion battery includes a cathode plate, an anode plate, an isolation film disposed between the cathode and anode plates, and an electrolyte. The cathode plate includes a cathode current collector and a cathode active material distributed on the cathode current collector. The lithium-ion battery uses the cathode material having the defect layer according to Embodiments 1 to 4 of this application as the cathode active material.

### Embodiment 6

Embodiment of the present invention further provides a mobile terminal, including a housing, a working circuit, and a charging port installed on the housing. The mobile terminal includes the lithium-ion battery including the cathode material having the defect layer in Embodiment 4, and the lithium-ion battery is configured to supply electric energy to the working circuit and is charged by using the charging port.

## Claims

1. A lithium-ion battery cathode material, wherein the lithium-ion battery cathode material comprises a layered cathode material matrix and a defect layer;
the layered cathode material matrix comprises body layers and lithium layers, and the body layer comprises a transition metal layer and an oxygen layer; and
when a periodic arrangement of atoms comprised in the defect layer is different from that of atoms comprised in the matrix, the defect layer and the layered cathode material matrix have different interlayer spacings; or
when an element comprised in the defect layer is different from an element comprised in the matrix, the defect layer comprises a first element or a second element, content of the first element or the second element in the defect layer is greater than or equal to that in the layered cathode material matrix, and the first element is different from the second element.

2. The cathode material according to claim 1, wherein the first element in the defect layer fills a gap between the body layers, or ions formed by the first element in the defect layer replace cations in the layered cathode material matrix.

3. The cathode material according to claim 1, wherein dimensions of the filling layer are 0.1 nm to 10 nm in at least one direction and 10 nm to 2000 nm in at least another direction.

4. The cathode material according to claim 2 or 3, wherein an ionic radius of the first element ranges from 0.04 nm to 0.08 nm.

5. The cathode material according to any one of claims 2 to 4, wherein the first element comprises at least one of Mg, Al, Ni, Mn, Ca, Fe, Ga, Ti, Mo, W, Zn, B, or Sn.

6. The cathode material according to any one of claims 2 to 5, wherein the defect layer further comprises the second element, and content of the second element in the defect layer is greater than or equal to that in the layered cathode material matrix; and the second element in the defect layer fills the gap between the body layers, or ions formed by the second element in the defect layer replace anions in the layered cathode material matrix.

7. The cathode material according to claim 6, wherein the second element is at least one of F, Cl, C, S, or P.

8. The cathode material according to claim 6 or 7, wherein electronegativity of the second element is higher than electronegativity of the oxygen element.

9. The cathode material according to any one of claims 6 to 8, wherein bond energy of an ionic bond formed between the first element and the second element is greater than bond energy of an ionic bond formed between the transition metal and the oxygen in the layered cathode material matrix.

10. The cathode material according to any one of claims 1 to 9, wherein the defect layer is parallel to a 003 crystal plane of the layered cathode material matrix.

11. The cathode material according to claim 2, wherein the defect layer comprises the second element, and content of the second element in the defect layer is greater than or equal to that in the layered cathode material matrix; and the second element in the defect layer fills the gap between the body layers, or ions formed by the second element in the defect layer replace anions in the layered cathode material matrix.

12. The cathode material according to claim 2 or 11, wherein the second element comprises at least one of F, Cl, C, S, or P.

13. The cathode material according to claim 11 or 12, wherein electronegativity of the second element is higher than electronegativity of the oxygen element.

14. The cathode material according to any one of claims 11 to 13, wherein the defect layer comprises the first element, and content of the first element in the defect layer is greater than or equal to that in the layered cathode material matrix; and the first element in the defect layer fills the gap between the body layers, or ions formed by the first element in the defect layer replace cations in the layered cathode material matrix.

15. The cathode material according to claim 14, wherein an ionic radius of the first element ranges from 0.04 nm to 0.08 nm.

16. The cathode material according to claim 14 or 15, wherein the first element comprises at least one of Mg, Al, Ni, Mn, Ca, Fe, Ga, Ti, Mo, W, Zn, B, or Sn.

17. A method for preparing a lithium-ion battery cathode material, wherein the method comprises:
mixing a cathode material precursor with a lithium source, and after primary sintering, performing primary cooling with a rate of the cooling greater than a natural cooling rate, to obtain a cathode material having a defect layer with a periodic arrangement different from that of atoms in a matrix; and
mixing the cathode material having the defect layer with a periodic arrangement different from that of atoms in the matrix and a compound containing a first element or a second element, and after secondary sintering, performing secondary cooling, to obtain a cathode material, wherein the cathode material comprises a layered cathode material matrix and a plurality of defect layers dispersed in the layered cathode material matrix, the defect layer comprises the first element or the second element, and content of the first element or the second element in the defect layer is greater than or equal to that in the layered cathode material matrix.

18. The method according to claim 17, wherein the first element or the second element in the defect layer fills a gap between body layers of the layered cathode material matrix, or ions formed by the first element or the second element in the defect layer replace lithium ions, or ions in the body layer.

19. The method according to claim 17 or 18, wherein the rate of the primary cooling is greater than or equal to 5°C/min.

20. The method according to any one of claims 17 to 19, wherein the rate of the primary cooling is greater than or equal to 10°C/min.

21. The method according to any one of claims 17 to 20, wherein the compound containing the first element or the second element comprises at least one of: lithium fluoride, magnesium fluoride, aluminum fluoride, nickel fluoride, manganese fluoride, calcium fluoride, iron fluoride, gallium fluoride, titanium fluoride, molybdenum fluoride, tungsten fluoride, lithium chloride, magnesium chloride, aluminum chloride, nickel chloride, manganese fluoride, calcium chloride, ferric chloride, gallium chloride, titanium chloride, molybdenum chloride, tungsten chloride, lithium carbonate, magnesium carbonate, aluminum carbonate, nickel carbonate, manganese carbonate, calcium carbonate, iron carbonate, titanium carbonate, lithium sulfide, magnesium sulfide, aluminum sulfide, nickel sulfide, manganese sulfide, calcium sulfide, titanium sulfide, molybdenum sulfide, tungsten sulfide, lithium oxide, magnesium oxide, aluminum oxide, nickel oxide, manganese oxide, calcium oxide, iron oxide, gallium oxide, titanium oxide, molybdenum oxide, tungsten oxide, lanthanum fluoride, lanthanum chloride, lanthanum sulfide, zinc fluoride, zinc chloride, zinc carbonate, zinc sulfide, zinc oxide, boron fluoride, boron chloride, boron oxide, tin fluoride, tin chloride, tin oxide, tin carbonate, tin sulfide, lithium phosphate, magnesium phosphate, aluminum phosphate, or iron phosphate.

22. The method according to any one of claims 17 to 21, wherein the cathode material precursor comprises at least one of cobalt tetroxide, cobalt carbonate, cobalt hydroxide, cobalt oxyhydroxide, or a nickel-cobalt-manganese ternary hydroxide precursor.

23. A lithium-ion battery, wherein the lithium-ion battery comprises a cathode plate, an anode plate, an electrolyte, and an isolation film disposed between the cathode and anode plates, wherein the cathode plate comprises a cathode current collector and a cathode active material layer distributed on the cathode current collector, and the cathode active material layer is the lithium-ion battery cathode material according to any one of claims 1 to 15.

24. A mobile terminal, comprising a housing, a working circuit, and a charging port installed on the housing, wherein the mobile terminal comprises the ion battery according to claim 23, and the lithium-ion battery is configured to supply electric energy to the working circuit and is charged by using the charging port.
